**Europäisches Patentamt**

**European Patent Office**

**Office européen des brevets**

(11) Veröffentlichungsnummer: **0 182 381**
**B1**

(12)

# EUROPÄISCHE PATENTSCHRIFT

(45) Veröffentlichungstag der Patentschrift:
07.03.90

(51) Int. Cl.⁴: **B65D 5/18**

(21) Anmeldenummer: **85114801.5**

(22) Anmeldetag: **21.11.85**

(54) **Zuschnitt aus Karton od. dgl. zum Herstellen einer Kassette.**

(30) Priorität: **23.11.84 DE 8434292 U**

(43) Veröffentlichungstag der Anmeldung:
**28.05.86 Patentblatt 86/22**

(45) Bekanntmachung des Hinweises auf die Patenterteilung:
**07.03.90 Patentblatt 90/10**

(84) Benannte Vertragsstaaten:
**BE DE FR NL**

(56) Entgegenhaltungen:
**AT-B- 374 952**
**DE-A- 1 807 679**
**DE-A- 3 047 056**

(73) Patentinhaber: **UNILEVER NV, Burgemeester
s'Jacobplein 1 P.O. Box 760, NL-3000 DK Rotterdam(NL)**

(72) Erfinder: **Gaube, Günther Theobald, Eichendorffweg 4,
D-8960 Kempten(DE)**

(74) Vertreter: **Hutzelmann, Gerhard et al, Duracher
Strasse 22, D-8960 Kempten(DE)**

## Beschreibung

Die Erfindung betrifft einen Zuschnitt aus Karton od. dgl. zum Herstellen einer Kassette zum Einschieben eines Buches, einer Bandkassette od. dgl., mit einem Rückenteil, an dem beiderseits je eine Außenlage der beiden Seitenwände angelenkt ist, die ihrerseits gelenkig mit je einer Innenlage dieser Seitenwände verbunden sind, wobei an den beiden freien Kanten der beiden Außenlagen Klappen angelenkt sind, die in ihrer Breite etwa der Breite des Rückenteils entsprechen und die Stirnwände der Kassette bilden und wobei an wenigstens einer der beiden Innenlagen zwei weitere Stirnwand-Klappen angelenkt sind.

Eine aus der Praxis bekannte aus einem solchen Zuschnitt aufgerichtete Kassette ist verhältnismäßig schnell und leicht aufzurichten und hat auch glatte und abriebfeste Seitenwände; ihre Stirnwände sind jedoch nicht befriedigend, da die Kassette od. dgl. an ihrer Innenseite einen starken Abrieb verursacht.

In der DE-OS 3047056 ist zwar ein derartiger Zuschnitt beschrieben, dessen Wände einschließlich der Stirnwände durch Verdoppelung mit einer glatten Innenseite versehen sind. Dieser Zuschnitt ist hervorragend gestaltet, er erfordert jedoch zum Aufrichten eine aufwendige Vorrichtung, die nur für große Stückzahlen wirtschaftlich ist. Für einfache Aufrichtmaschinen bzw. zum Aufrichten von Hand ist der dort beschriebene Zuschnitt nicht geeignet.

Der Erfindung liegt die Aufgabe zugrunde, einen Zuschnitt zu schaffen, der mit einfachen Mitteln zu einer Kassette aufzurichten ist, deren Innenwände ausreichend abriebfest sind.

Diese Aufgabe wird gemäß der Erfindung dadurch gelöst, daß die weiteren Stirnwand-Klappen mit den Stirnwand-Klappen der benachbarten Außenlage gelenkig verbunden sind und daß in deren Anlenklinie zur Innenlage Ausnehmungen angeordnet sind.

Durch die Verbindung der beiden benachbarten Stirnwand-Klappen werden diese beim Aufeinanderklappen der beiden Seitenwand-Lagen ebenfalls um ihre Verbindungslinie zueinander gefaltet. Beim gemeinsamen Auffalten der Stirnwand-Klappen um 90° kann die dann innenliegende Klappe infolge der Ausnehmungen in ihrer Anlenklinie ausweichen, wodurch eine saubere Einfaltung der Außenlage erreicht wird.

Eine vorteilhafte Ausgestaltung einer Kassette, die aus einem erfindungsgemäßen Zuschnitt hergestellt ist, liegt darin, daß am Rückenteil zwei Staubklappen angeformt sind, deren eine Kante abgeschrägt ist und die beim Aufrichten der Kassette in entsprechende Ausnehmungen in den an der einen Außenlage angeformten Stirnwand-Klappen eingreifen.

Damit ist eine einwandfreie Abdichtung der Kassette, insbesondere im kritischen Rückenbereich, erzielt.

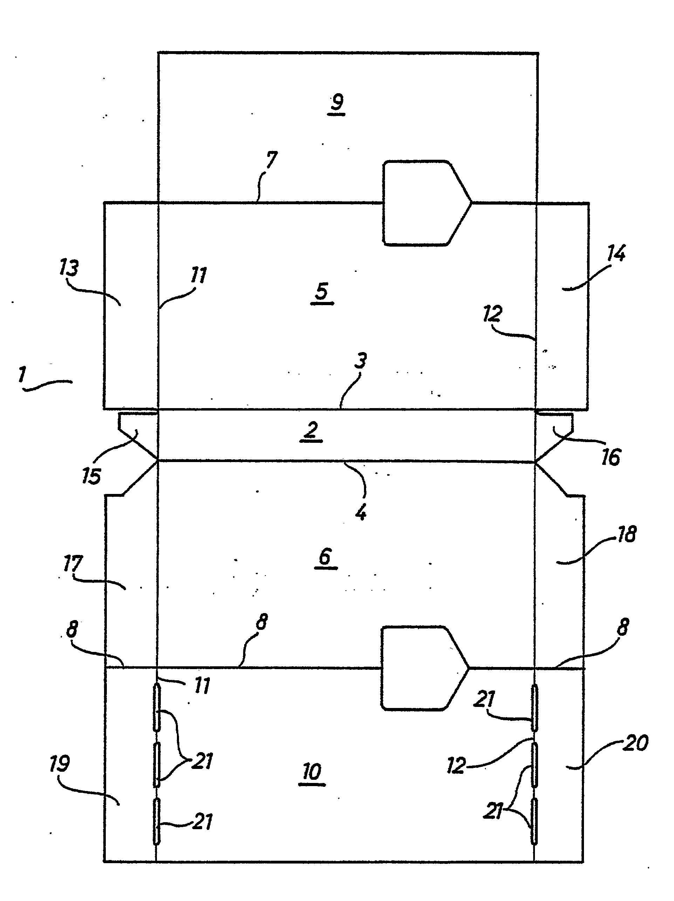

In der Zeichnung ist die Erfindung anhand eines Ausführungsbeispiels dargestellt.

Mit 1 ist ein Zuschnitt bezeichnet, der durch Ausstanzen aus Karton hergestellt ist. Der Zuschnitt 1 hat ein Rückenteil 2, an dem über Faltlinien 3 und 4 je eine Außenlage 5 und 6 der beiden Seitenwände angelenkt ist. Jede dieser beiden Außenlagen ist wiederum über eine Faltlinie 7 bzw. 8 mit einer Innenlage 9 bzw. 10 der jeweiligen Seitenwand verbunden.

Die Außenlagen 5 und 6, das Rückenteil 2 und die Innenlage 10 werden darüber hinaus durch zwei durchgehende Faltlinien 11 und 12 begrenzt. Über diese Faltlinien 11 und 12 sind an der Außenlage 5 zwei Stirnwand-Klappen 13 und 14 angelenkt, die beim Auffalten des Zuschnittes zu einer Kassette die Außenlagen der Stirnwände bilden. Das Rückenteil 2 trägt, ebenfalls über die beiden Faltlinien 11 und 12, zwei Staubklappen 15 und 16, die hinter die Stirnwand-Klappen 13 und 14 eingefaltet werden. An der Außenlage 6 sind ebenfalls über die Faltlinien 11 und 12 zwei weitere Stirnwand-Klappen 17 und 18 angeformt, die über die Faltlinie 8 mit zwei weiteren, an der Innenlage 10 angeformten, Stirnwand-Klappen 19 und 2 0 verbunden sind.

Im Verlauf der beiden Faltlinien 11 und 12 sind zwischen der Innenlage 10 und den beiden daran angelenkten Stirnwand-Klappen 19 bzw. 20 jeweils drei hintereinander liegende langlochförmige Ausnehmungen 21 ausgestanzt. In den zwischen und neben diesen Ausnehmungen 21 verbleibenden Materialbrücken der Faltlinie kann das Kartonmaterial beim Falten ausweichen, wodurch sich die beiden Klappen 17 und 18 einwandfrei falten lassen. Anstelle der drei hintereinander liegenden Ausnehmungen kann auch eine einzige über die gleiche Länge reichende Ausnehmung vorgesehen sein.

Durch diese Ausgestaltung ist die mit dem einzuschiebenden Teil in Berührung kommende Kante (Faltlinie 8) der Kassette glatt und abriebfest.

## Patentansprüche

1. Zuschnitt aus Karton od.dgl. zum Herstellen einer Kassette zum Einschieben eines Buches, einer Bandkassette od.dgl., mit einem Rückenteil (2), an dem beiderseits je eine Außenlage (5, 6) der beiden Seitenwände angelenkt ist, die ihrerseits gelenkig mit je einer Innenlage (9, 10) dieser Seitenwände verbunden sind, wobei an den beiden freien Kanten der beiden Außenlagen (5, 6) Klappen (13, 14; 17, 18) angelenkt sind, die in ihrer Breite etwa der Breite des Rückenteils (2) entsprechen und die Stirnwände der Kassette bilden und wobei an wenigstens einer der beiden Innenlagen (9, 10) zwei weitere Stirnwand-Klappen (19, 20) angelenkt sind, dadurch gekennzeichnet, daß die weiteren Stirnwand-Klappen (19, 20) mit den Stirnwand-Klappen (17, 18) der benachbarten Außenlage (6) gelenkig verbunden sind, und daß in deren Anlenklinie (11, 12) zur Innenlage Ausnehmungen (21) angeordnet sind.

2. Zuschnitt nach Anspruch 1, dadurch gekennzeichnet, daß am Rückenteil (2) zwei Staubklappen (15, 16) angeformt sind, deren eine Kante abgeschrägt ist und die beim Aufrichten der Kassette in entsprechende Ausnehmungen in den an der einen Außenlage (6) angeformten Stirnwand-Klappen (17, 18) eingreifen.

EP 0 182 381 B1

## Claims

1. Blank made from board or a similar material for the production of a jacket into which a book or a tape cassette etc. is inserted, with a spine (2), to each side of which an outer layer (5, 6) of one of the two side panels is hinged, each of these outer layers being hinged to an inner layer (9, 10) of these side panels, while flaps (13, 14; 17, 18) which are approximately as wide as the spine (2) and form the end panels of the jacket are hinged to the two free edges of the two outer layers (5, 6) and while two further end panel flaps (19, 20) are hinged to at least one of the two inner layers (9, 10), wherein the further end panel flaps (19, 20) are hinged to the end panel flaps (17, 18) of the adjacent outer layer (6) and wherein openings (21) are provided in the hinge line (11, 12) between the further end panel flaps and the inner layer.

2. Blank according to claim 1, wherein two dust flaps (15, 16), one edge of which is bevelled and which engage appropriate cut-outs in the end panel flaps (17, 18) provided on one of the outer layers (6) when the jacket is erected, are provided on the spine (2).

## Revendications

1. Flan en carton ou analogue pour la fabrication d'une boîte pour y placer un livre, une cassette de bande ou analogue, comportant une partie (2) formant le dos, à laquelle, des deux côtés, est chaque fois articulée une couche extérieure (5, 6) des deux parois latérales, couches extérieures, qui, de leur côté, sont reliées, avec articulation, à, chacune, une couche intérieure (9, 10) de ces parois latérales, étant précisé qu'aux deux arêtes libres des deux couches extérieures (5, 6) sont articulés des rabats (13, 14; 17, 18) dont la largeur correspond à peu près à la largeur de la partie (2) formant le dos et qui forment les parois frontales de la boîte, et étant précisé qu'à au moins l'une des deux couches intérieures (9, 10) sont articulés deux autres rabats (19, 20) formant paroi frontale, caractérisé en ce que les autres rabats (19, 20) formant paroi frontale sont reliés, avec articulation, aux rabats (17, 18), formant paroi frontale, de la couche extérieure voisine (6); et en ce que des découpes (21) sont prévues sur leur ligne (11, 12) d'articulation avec la couche intérieure.

2. Flan selon la revendication 1, caractérisé en ce que sur la partie (2) formant le dos sont venus de matière deux rabats anti-poussière (15, 16) dont l'un des bords est chanfreiné et qui, lors du montage de la boîte, viennent en prise dans des découpes correspondantes prévues dans les rabats (17, 18) formant paroi frontale venus de matière sur l'une des couches extérieures (6).